# EUROPEAN PATENT SPECIFICATION

(11) **EP 0 626 784 B1**
(45) Date of publication and mention of the grant of the patent: **06.11.2002**
(21) Application number: 94303792.9
(22) Date of filing: 26.05.1994
(51) Int. Cl.: H04N 3/15

(54) **Gain-controlled solid-state image pickup device**
Festkörper-Bildaufnahmeeinrichtung mit steuerbarer Verstärkung
Dispositif de prise d'images à l'état solide à contrôle de gain

(30) Priority: 28.05.1993 JP 12708693
(43) Date of publication of application: 30.11.1994
(73) Proprietor: CANON KABUSHIKI KAISHA, Tokyo (JP)
(72) Inventor: Miyawaki, Mamoru, c/o Canon Kabushiki Kaisha, Toyko (JP); Ueno, Isamu, c/o Canon Kabushiki Kaisha, Toyko (JP)
(74) Representative: Beresford, Keith Denis Lewis

(56) References cited:
- EP-A- 0 473 966
- WO-A-91/04633
- GB-A- 2 185 654
- US-A- 5 146 339

## Description

### BACKGROUND OF THE INVENTION

### Field of the Invention

The present invention relates to a photo-electric conversion apparatus e.g. used in an AE (Auto-Exposure) sensor or AF (Auto-Focus) sensor of a copying machine, a facsimile machine, a video camera recorder and a camera.

### Related Background Art

As electronics technology has developed recently, high image resolution and high image quality have rapidly been realised in the field of a solid state image pick-up device used as a photo-electric conversion apparatus. An output of the solid state image pick-up device is rarely used as it is but it is processed in several stages before it is formed into a TV signal.

Accordingly, when the number of pixels is increased to attain high resolution, a huge volume of operation and processing are required in the signal processing and the high image quality may be restricted by the signal processing.

GB-A-2185654 discloses an array of photosensors for detecting a scanned laser beam reflected from an original. Because of the scanning action, the amount of light integrated by the photosensors for a uniform original varies according to the position of each sensor along the array. Several arrangements are proposed for compensating the output signals from the photosensors for this effect. In one case the array is divided into sets of consecutive sensor elements, each set having a respective signal amplifier, or alternatively a separate signal amplifier is provided for each photosensor. The gains of the different amplifiers are set at different levels, so as to provide the necessary compensation.

WO-A-91/04633 discloses an array image sensor having an array of pixels laid out in rows and columns, and each vertical column of pixels is connected to a common bit line conductor which is connected to a respective analog switch sense amplifier. In one illustrated circuit for the sense amplifier, its gain is controlled by the value of a feedback capacitor. It is proposed that within the column sense amplifier automatic gain control may be used to improve black image quality.

### SUMMARY OF THE INVENTION

According to the present invention there is provided photoelectric conversion apparatus as set out in claim 1. Optional features are set out in the remaining claims.

A solid state image pick-up device embodying the invention produces signals multiplied by coefficients in order to build a signal processing function into the solid state image pick-up device.

An embodiment of the present invention provides a photo-electric conversion apparatus comprising a plurality of photo-electric conversion elements and an externally gain controllable amplifier at an output terminal of each photo-electric conversion element, so that signal processing is provided by multiplying each signal by a desired coefficient.

Other aspects and advantages of the present invention will be apparent from the claims, and from the following description of non-limiting embodiments and the accompanying drawings.

### BRIEF DESCRIPTION OF THE DRAWINGS

Fig. 1 shows a circuit configuration of a photo-electric conversion apparatus in accordance with an embodiment 1 of the present invention,
Fig. 2 shows a timing chart for illustrating an operation of the embodiment 1 of the photo-electric conversion apparatus,
Fig. 3 shows a circuit diagram of an amplifier used in the present invention,
Fig. 4 shows a graph of a characteristic of the amplifier,
Fig. 5 shows a circuit configuration of a photo-electric conversion apparatus in accordance with an embodiment 2 of the present invention,
Fig. 6 shows a circuit configuration of a photo-electric conversion apparatus in accordance with an embodiment 3 of the present invention,
Fig. 7 shows a circuit configuration of a photo-electric conversion apparatus in accordance with an embodiment 4 of the present invention, and
Fig. 8 shows a circuit configuration of a photo-electric conversion apparatus in accordance with an embodiment 5 of the present invention.

### DETAILED DESCRIPTION OF THE PREFERRED EMBODIMENTS

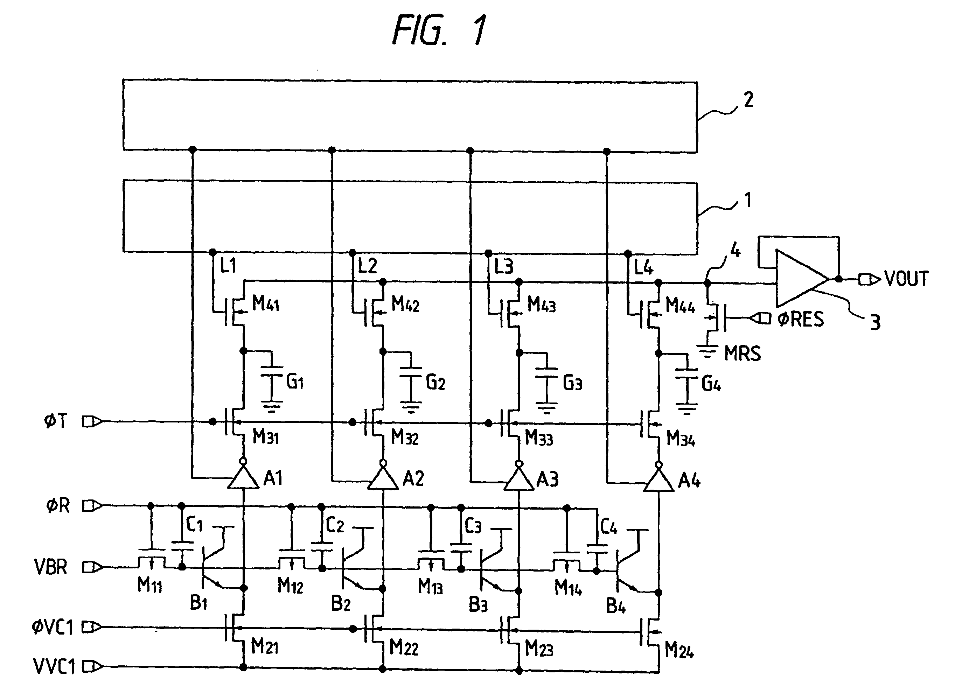

Fig. 1 shows a first embodiment of the present invention. In the present embodiment, bipolar photo-electric conversion elements are one-dimensionally arranged as photo-electric conversion elements, and base regions thereof are interconnected through PMOS transistors M₁₁ - M₁₄.

Amplifiers A1 - A4 are independently connected to respective emitter output lines of the photo-electric elements.

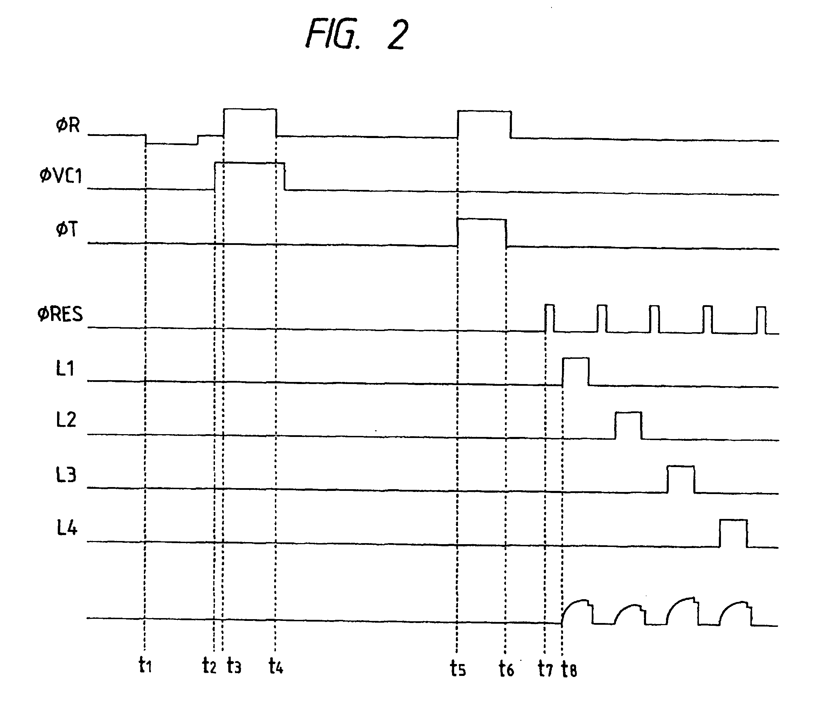

An operation of the present embodiment is explained by referring to a timing chart of Fig. 2.

At a time t₁, a pulse of a low level is applied to φ_{R} so that the PMOS transistors M₁₁ - M₁₄ are turned on and the bases of the bipolar transistors B₁ - B₄ are connected in common and reset to V_{BR}. Thereafter, φ_{R} rises to a middle level so that the PMOS transistors M₁₁ - M14 are turned off and the reset operation is terminated.

At a time t₂, a pulse φ_{VC1} rises and the NMOS transistors M₂₁ - M₂₄ are turned on so that emitter terminals of all bipolar transistors B₁ - B₄ are reset to a voltage V_{VC1} and at a time t₃, a pulse φ_{R} rises to a high level so that the base potentials of the bipolar transistors B₁ - B₄ are brought up through capacitors C₁ - C₄ and the base-emitter junctions is forwardly biased. Thus, the bipolar transistors simultaneously operate in an emitter follower mode and holes in the bases are recombined and the base potentials are settled around V_{VC1} + V_{BE} (Transient reset operation). When the transient reset operation is terminated, at a time t₄, the pulse φ_{R} falls to the middle level so that the base potentials of the respective bipolar transistors fall through the capacitors C₁ - C₄ and the base-emitter junction is reversely biased. From this state, an accumulation operation of the photo-carriers starts.

After a predetermined accumulation time has elapsed, at the time t₅, the pulses φ_{T} and φ_{R} rise to the high level so that the NMOS transistors M₃₁ - M₃₄ are turned on and the base potentials of the bipolar transistors B₁ - B₄ are brought up to forwardly bias the base-emitter junction. Thus, the photo-carriers accumulated on the bases are outputted from the emitter terminals. By applying predetermined voltages from a signal supply 2 to the control terminals of the amplifiers A₁ - A₄, the respective amplifiers may have desired gains.

The outputs of the amplifiers A₁ - A₄ are read to capacitors G₁ - G₄, respectively, and at a time t₆, the pulse φ_{T} falls to the low level so that the NMOS transistors M₃₁ - M₃₄ are turned off and the voltages on the respective capacitors G₁ - G₄ are maintained. At the time t₅, the pulses φ_{T} and φ_{R} rise to the high level simultaneously. However, it is preferable that the pulse φ_{T} raises to the high level earlier than the pulse φ_{R}.

Thereafter, at a time t₇, a high level pulse is applied to φ_{RES} so that the NMOS transistor M_{RS} is turned on, and after the output line 4 is reset, the scan circuit 1 is operated from time t₈ onwards to transfer the signals to the output terminal V_{OUT} through the output buffer 3 starting from the signal on G₁.

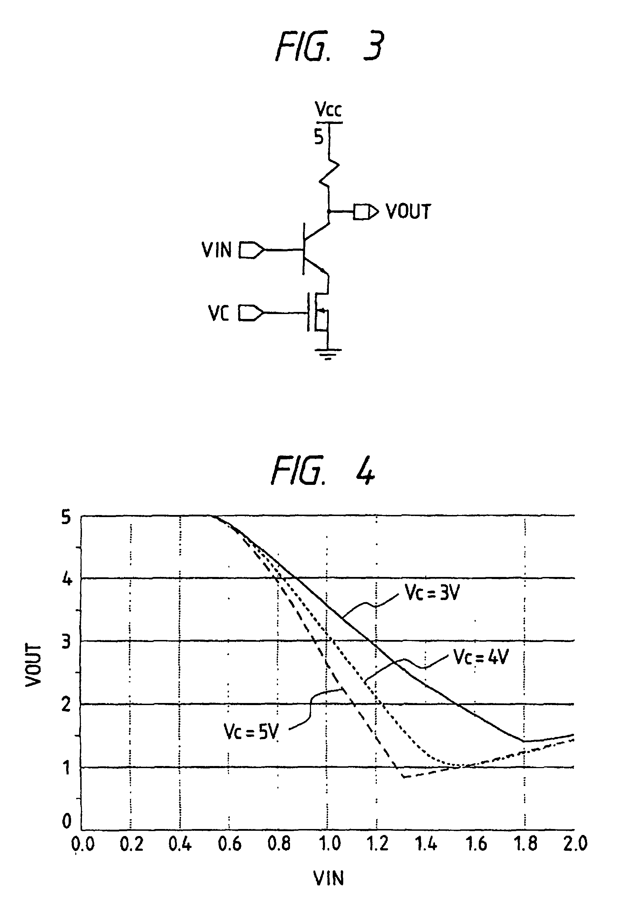

A preferred embodiment of the amplifiers A1 - A4 and a DC characteristic thereof are shown in Figs. 3 and 4.

Fig. 3 shows an inverting amplifier using an NPN transistor and a gain thereof is controlled by a gate voltage of an NMOS transistor connected to an emitter terminal.

Calculation of a DC characteristic of the inverting amplifier is shown in Fig. 4.

In Fig. 4, an abscissa represents an input voltage V_{IN} and an ordinate represents an output voltage V_{OUT}, and a graph is shown with the gain control voltage V_{C} being used as a parameter. As seen from Fig. 4, the larger the V_{C} is, the larger is the gain. Thus, it is suitable for the present invention because of its smaller circuit scale. Needless to say, other types of amplifier may be used.

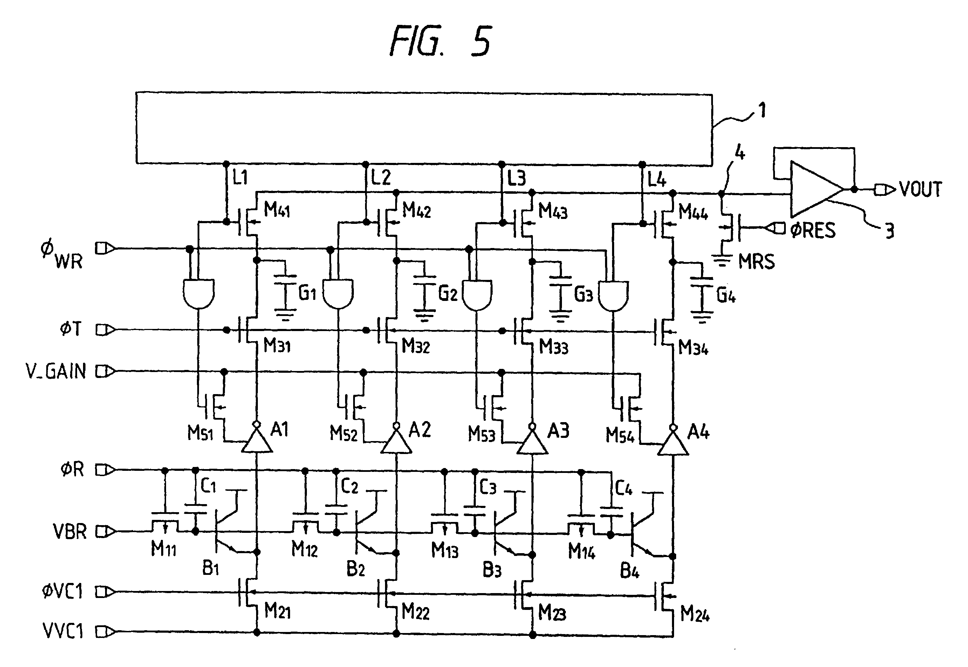

Fig. 5 shows a second embodiment of the present invention. The present embodiment is an improvement over the first embodiment in that the signal supply 2 is omitted and the gain control voltages of the amplifiers A1 - A4 are serially applied from a terminal V-GAIN.

In operation, the scan circuit 1 is operated during the accumulation period and the pulse φ_{WR} rises to the high level, the NMOS transistor M51 is turned on so that the gain control voltage of the amplifier A1 is written from the terminal V-GAIN. Thereafter, the pulse L1 is set to the low level and M51 is turned off to hold the written voltage. This operation is sequentially carried out for the amplifiers A1 - A4, and thereafter the pulse φ_{R} is set to the high level so that the respective photo-electric conversion elements carry out the read operation and the voltages multiplied by the factors of the respective gains are stored in capacitors G₁ - G₄.

Other operations may be carried out in the same manner as those of Fig. 1.

Accordingly, the space is significantly saved compared to case where the signal supply 2 is provided for each amplifier.

In the above explanation of the operation, the control voltages of the amplifiers A1 - A4 are written during the accumulation period although they may be written in some other period, for example during the sequential transfer of the charges from capacitors G₁ - G₄. In this case, the gain control voltages written in the amplifiers A1 - A4 are used in the next photo-electric conversion operation.

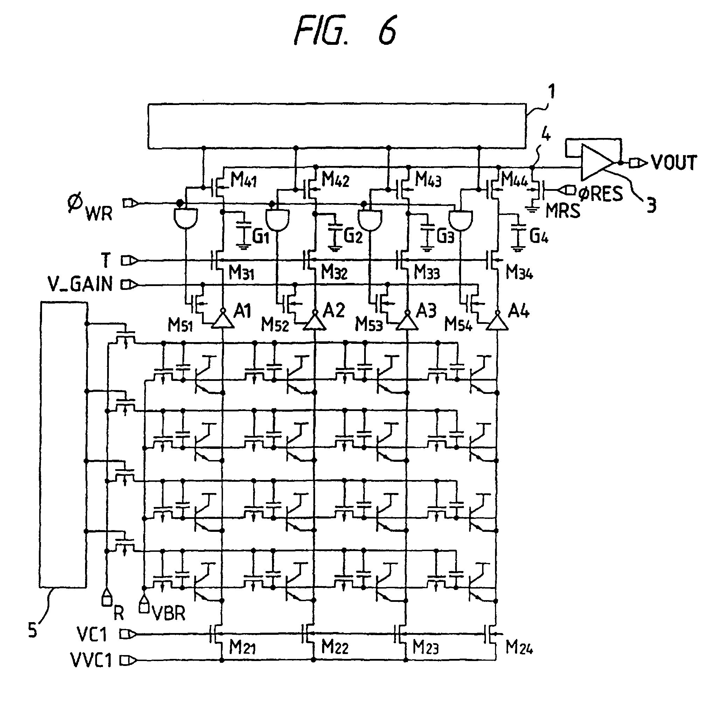

Fig. 6 shows a third embodiment of the present invention. In the present embodiment, the second embodiment is developed to a two-dimensional photo-electric conversion apparatus. A vertical scan circuit 5 is provided to conduct serial resetting and signal reading of the photo-electric conversion elements row by row. The basic operation is identical to that of the second embodiment.

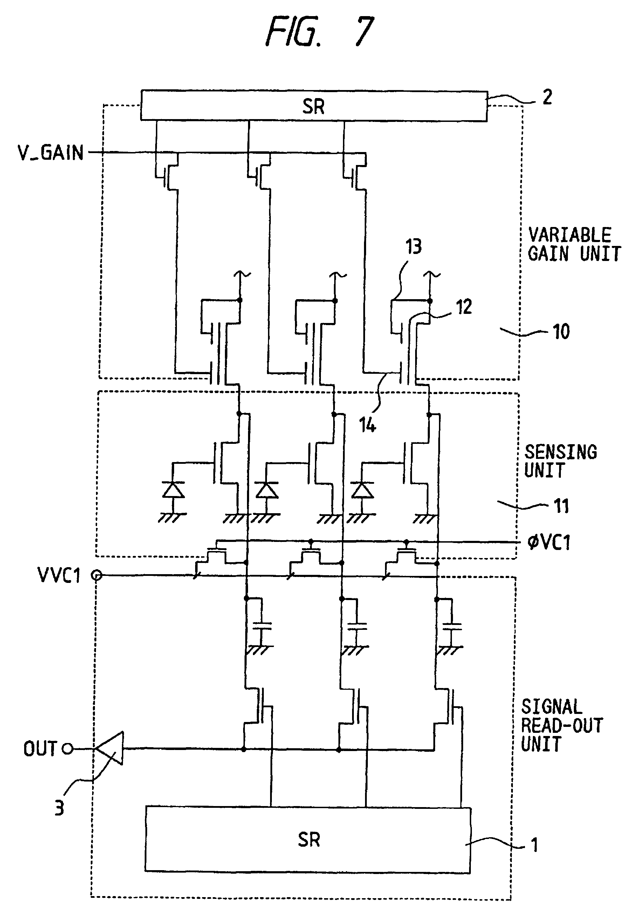

Fig. 7 shows a fourth embodiment of the present invention. In the first to third embodiments, the photo-electric conversion apparatus the photo-electric conversion elements are bipolar transistors having the base-collector junctions used as the photo-diodes. In the present embodiment, MOS's are used. The like elements to those of the previous embodiments are designated by the like numerals and the explanation thereof is omitted. In a sensing unit 11, a photo-diode is connected to a gate of an MOS, and in a variable gain unit 10, a resistor of an MOS amplifier is a variable resistor which comprises a double structure MOS gate switch. A lower gate 12 of the MOS gate switch is floating, a first upper gate 13 is connected to a power supply, and a voltage pulse is applied to the second upper gate 14.

The potential of the floating gate changes with the amplitude of the voltage pulse applied to the second upper gate 14 so that the MOS's of the amplifier 10 function as variable resistors. In the present embodiment, the photo signal generated by the photo-diode is amplified by the gain of the amplifier as determined by the variable resistor, and the modulated signal is sequentially read by a shift register via a read capacitor.

While Fig. 7 shows the one-dimensional sensor, it should be understood that the present invention is not limited to the one-dimensional sensor but it may be applied to a two-dimensional sensor.

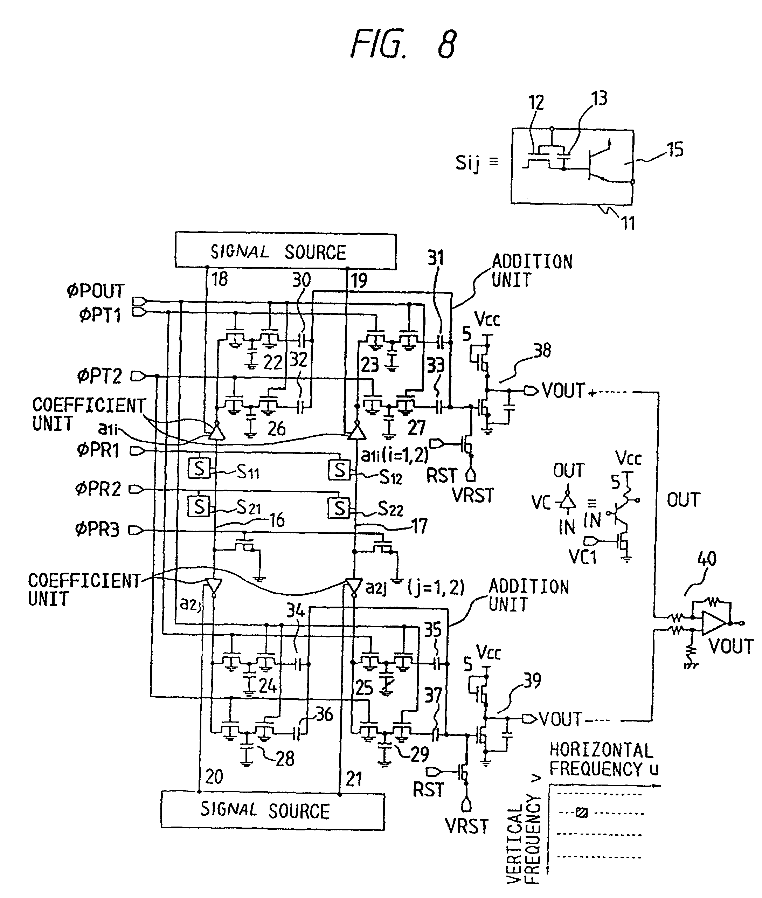

A fifth embodiment of the present invention is shown in Fig. 8. Sᵢⱼ (ij = 1-2) comprises a base isolation PMOS 12, a base potential control capacitor 13 and a bipolar transistor 15.

Cells S₁₁ and S₂₁ output to a vertical line 16, and cells S₁₂ and S₂₂ output to a vertical line 17. Line selection is conducted by pulses φ_{PR1} and φ_{PR2}.

First, a high pulse is applied to φ_{PR1} so that the cells S₁₁ and S₁₂ are selected, and the respective outputs are simultaneously read to the gates of the amplifiers aᵢⱼ (i,j = 1,2).

The gains of the amplifiers are adjusted by the vertically arranged signal supplies through wires 18, 19, 20 and 21, and the pulse φ_{PT1} is set to the high level to read the photo output of the S₁₁ multiplied by the gain of the amplifier a₁₁ to the capacitor 22, the photo output of the S₁₂ multiplied by the gain of the amplifier a₁₂ to the capacitor 23, the photo output of the S₁₁ multiplied by the gain of the amplifier a₂₁ to the capacitor 24, and the photo output of the S₁₂ multiplied by the gain of the amplifier a₂₂ to the capacitor 25.

The pulse φ_{PR1} is then set to the low level and the pulse φ_{PR2} is rendered to the high level so that the cells S₂₁ and S₂₂ are selected and they are read to the gates of the amplifiers aᵢⱼ (ij = 1 - 2).

The pulse φ_{PT2} is set to the high level to read the photo output of the cell S₂₁ multiplied by the gain of the amplifier a₁₁ to the capacitor 26, the photo output of the cell S₂₂ multiplied by the gain of the amplifier a₁₂ to the capacitor 27, the photo output of the cell S₂₁ multiplied by the gain of the amplifier a₂₁ to the capacitor 28, and the photo output of the cell S₂₂ multiplied by the gain of the amplifier a₂₂ to the capacitor 29.

The signals read to the capacitors 22, 23, 26 and 27 are summed through the capacitors 30, 31, 32 and 33 and outputted from the amplifier 38, and the signals read to the capacitors 24, 25, 28 and 29 are summed through the capacitors 34, 35, 36 and 37 and outputted from the amplifier 39.

The outputs of the amplifiers 38 and 39 are substracted by a differential amplifier 40. Accordingly, the gains may include positive gains and negative gains so that Fourier transform output of the image can be read at a high speed.

Using the above, and other analogous embodiments, the following technological advantages (1)-(4) can be attained since the sensor can output therefrom a signal on which various image processings, for example, convolution, edge output, Laplace transform, Fourier transform and wavelet transform, have been performed.
(1) A photo-electric conversion apparatus can be formed on one chip, so that the cost of production can be reduced.
(2) High-speed processing can be attained since processing can be done in a parallel operation on image data itself rather than on the serial output of the sensor.
(3) A plurality of processings can be attained by one chip.
(4) Image recognition and image discrimination can be attained functionally.

Other types of photosensor element may be used, such as non-bipolar phototransistors, and the bipolar type phototransistor may be used without the base control capacitors C1, C2, C3, C4 (in which case accumulation and read-out from the phototransistor may be simultaneous).

## Claims

1. Photo-electric conversion apparatus comprising:
a) a plurality of photo-electric conversion elements (B, 11, S);
b) a plurality of separate output lines each connected to receive an output signal from one or a plurality of said photo-electric conversion elements;
c) a plurality of gain controllable amplifiers (A, 10), each said output line being connected to at least one said amplifier for amplifying the said output signals received by the output line,
**characterised in that** each said amplifier has a terminal for receiving a respective gain control signal so that it amplifies the said output signals received by its respective output line by a gain controlled by the gain control signal,
and **in that** the apparatus further comprises
d) control means (2) common to the said plurality of amplifiers (A, 10) for supplying the respective gain control signals and thereby controlling the gains of said amplifiers, to perform a function other than AGC, where AGC is automatic gain control in response to the amplitudes of the output signals.

2. Photo-electric conversion apparatus according to claim 1 further comprising storage means (G, 22-29) for storing said output signals after amplification by the amplifiers.

3. Photo-electric conversion apparatus according to claim 2 wherein said storage means includes capacitors.

4. Photo-electric conversion apparatus according to claim 2 further comprising read means (M41 - M44) for serially reading the signals of said storage means.

5. Photo-electric conversion apparatus according to claim 4 wherein said read means is controlled by said control means.

6. Photo-electric conversion apparatus according to claim 1, wherein each of said gain controllable amplifiers includes a transistor having a plurality of gate electrodes (12, 13, 14), including a floating gate electrode (12).

7. Photo-electric conversion apparatus according to claim 1, further comprising processing means (38, 39, 40) for processing a plurality of output signals amplified by said gain controllable amplifier.

8. Photo-electric conversion apparatus according to claim 7, wherein the control means controls the gains of the amplifiers in accordance with a processing operation of the processing means which processing operation is Fourier transform.

9. Photo-electric conversion apparatus according to claim 7, wherein the control means controls the gains of the amplifiers in accordance with a processing operation of the processing means which processing operation is convolution, edge output, Laplace transform, or wavelet transform.

10. Photo-electric conversion apparatus according to claim 1, wherein the possible gains of the said amplifiers, controlled by the gain control signals, include positive and negative gains.

11. Photo-electric conversion apparatus according to claim 1 wherein said control means comprises means for supplying the respective gain control signals (V-GAIN) serially to the amplifiers.

12. Photo-electric conversion apparatus according to claim 1 wherein said control means comprises means for supplying the respective gain control signals in parallel to the amplifiers.

13. Photo-electric conversion apparatus according to claim 1 wherein the same said amplifier receives output signals from a plurality but not all of the said photo-electric conversion elements.

14. Photo-electric conversion apparatus according to claim 1 wherein the same photo-electric conversion element provides output signals to a plurality of said amplifiers.

15. Photoelectric conversion apparatus according to any one of the preceding claims, wherein the control means supplies the gain control signals during operation of the photoelectric conversion apparatus.

## Patentansprüche

1. Photoelektrische Wandlereinrichtung, mit
a) einer Vielzahl von photoelektrischen Wandlerelementen (B, 11, S),
b) einer Vielzahl von separaten Ausgangsleitungen, die jeweils zum Empfang eines Ausgangssignals von einem oder einer Vielzahl der photoelektrischen Wandlerelemente geschaltet sind, und
c) einer Vielzahl von verstärkungssteuerbaren Verstärkern (A, 10), wobei jede Ausgangsleitung mit zumindest einem Verstärker zur Verstärkung der über die Ausgangsleitung empfangenen Ausgangssignale verbunden ist,
**dadurch gekennzeichnet, daß**
jeder Verstärker einen Eingang zum Empfang eines jeweiligen Verstärkungssteuersignals aufweist, so daß er die über seine zugehörige Ausgangsleitung empfangenen Ausgangssignale mit einem von dem Verstärkungssteuersignal gesteuerten Verstärkungsfaktor verstärkt,
und daß
d) die photoelektrische Wandlereinrichtung eine der Vielzahl von Verstärkern (A, 10) zur Zuführung der jeweiligen Verstärkungssteuersignale und damit zur Steuerung der Verstärkungsfaktoren der Verstärker gemeinsam zugeordnete Steuereinrichtung (2) aufweist, die eine andersartige Funktion als eine automatische Verstärkungssteuerung ausführt, wobei eine automatische Verstärkungssteuerung in Abhängigkeit von den Amplituden der Ausgangssignale erfolgt.

2. Photoelektrische Wandlereinrichtung nach Anspruch 1, mit einer Speichereinrichtung (G, 22 bis 29) zur Speicherung der Ausgangssignale nach ihrer Verstärkung durch die Verstärker.

3. Photoelektrische Wandlereinrichtung nach Anspruch 2, wobei die Speichereinrichtung Kondensatoren aufweist.

4. Photoelektrische Wandlereinrichtung nach Anspruch 2, mit einer Leseeinrichtung (M41 bis M44) zum seriellen Lesen der Signale der Speichereinrichtung.

5. Photoelektrische Wandlereinrichtung nach Anspruch 4, wobei die Leseeinrichtung von der Steuereinrichtung gesteuert wird.

6. Photoelektrische Wandlereinrichtung nach Anspruch 1, wobei jeder der verstärkungssteuerbaren Verstärker einen Transistor mit einer Mehrzahl von Gate-Elektroden (12, 13, 14) einschließlich einer schwebenden Gate-Elektrode (12) aufweist.

7. Photoelektrische Wandlereinrichtung nach Anspruch 1, mit einer Signalverarbeitungseinrichtung (38, 39, 40) zur Verarbeitung einer Vielzahl von durch die verstärkungssteuerbaren Verstärker verstärkten Ausgangssignalen.

8. Photoelektrische Wandlereinrichtung nach Anspruch 7, wobei die Steuereinrichtung die Verstärkungsfaktoren der Verstärker in Abhängigkeit von einem Signalverarbeitungsvorgang der Signalverarbeitungseinrichtung steuert und der Signalverarbeitungsvorgang in Form einer Fouriertransformation erfolgt.

9. Photoelektrische Wandlereinrichtung nach Anspruch 7, wobei die Steuereinrichtung die Verstärkungsfaktoren der Verstärker in Abhängigkeit von einem Signalverarbeitungsvorgang der Signalverarbeitungseinrichtung steuert und der Signalverarbeitungsvorgang in Form einer Faltung, einer Ausgangssignalflankenverarbeitung, einer Laplacetransformation oder einer Wellenlängentransformation erfolgt.

10. Photoelektrische Wandlereinrichtung nach Anspruch 1, wobei die von den Verstärkungssteuersignalen gesteuerten möglichen Verstärkungsfaktoren der Verstärker positive und negative Verstärkungsfaktoren umfassen.

11. Photoelektrische Wandlereinrichtung nach Anspruch 1, wobei die Steuereinrichtung eine Einrichtung zur seriellen Zuführung der jeweiligen Verstärkungssteuersignale (V-GAIN) zu den Verstärkern aufweist.

12. Photoelektrische Wandlereinrichtung nach Anspruch 1, wobei die Steuereinrichtung eine Einrichtung zur parallelen Zuführung der jeweiligen Verstärkungssteuersignale zu den Verstärkern aufweist.

13. Photoelektrische Wandlereinrichtung nach Anspruch 1, wobei der gleiche Verstärker Ausgangssignale von einer Vielzahl der photoelektrischen Wandlerelemente, jedoch nicht von allen photoelektrischen Wandlerelementen empfängt.

14. Photoelektrische Wandlereinrichtung nach Anspruch 1, wobei das gleiche photoelektrische Wandlerelement Ausgangssignale an eine Vielzahl der Verstärker abgibt.

15. Photoelektrische Wandlereinrichtung nach einem der vorhergehenden Ansprüche, wobei die Steuereinrichtung die Verstärkungssteuersignale während des Betriebs der photoelektrischen Wandlereinrichtung zuführt.

## Revendications

1. Dispositif de conversion photo-électrique, comprenant :
a) une pluralité d'éléments de conversion photo-électriques (B, 11, S);
b) une pluralité de lignes de sortie séparées connectées chacune de façon à recevoir un signal de sortie venant de l'un ou d'une pluralité desdits éléments de conversion photo-électriques ;
c) une pluralité d'amplificateurs pouvant être commandés en gain (A, 10), chacune desdites lignes de sortie étant connectée à au moins l'un desdits amplificateurs pour amplifier lesdits signaux de sortie reçus par la ligne de sortie ;
**caractérisé en ce que** chacun desdits amplificateurs comporte une borne pour recevoir un signal de commande de gain respectif de telle sorte qu'il amplifie lesdits signaux de sortie reçus par sa ligne de sortie respective d'un gain commandé par le signal de commande de gain,
et **en ce que** le dispositif comprend de plus :
d) des moyens de commande (2) communs à ladite pluralité d'amplificateurs (A, 10) pour délivrer les signaux de commande de gain respectifs et commander par conséquents les gains desdits amplificateurs, de façon à exécuter une fonction autre que la commande automatique du gain, la commande automatique du gain étant une commande automatique du gain en réponse aux amplitudes des signaux de sortie.

2. Dispositif de conversion photo-électrique selon la revendication 1, comprenant de plus des moyens de stockage (G, 22 à 29) pour stocker lesdits signaux de sortie après amplification par les amplificateurs.

3. Dispositif de conversion photo-électrique selon la revendication 2, dans lequel lesdits moyens de stockage comprennent des condensateurs.

4. Dispositif de conversion photo-électrique selon la revendication 2, comprenant de plus des moyens de lecture (M41 à M44) pour lire en série les signaux desdits moyens de stockage.

5. Dispositif de conversion photo-électrique selon la revendication 4, dans lequel lesdits moyens de lecture sont commandés par lesdits moyens de commande.

6. Dispositif de conversion photo-électrique selon la revendication 1, dans lequel chacun desdits amplificateurs pouvant être commandé en gain comprend un transistor comportant une pluralité d'électrodes de grille (12, 13, 14), comprenant une électrode de grille flottante (12).

7. Dispositif de conversion photo-électrique selon la revendication 1, comprenant de plus des moyens de traitement (38, 39, 40) pour traiter une pluralité de signaux de sortie amplifiés par ledit amplificateur pouvant être commandé en gain.

8. Dispositif de conversion photo-électrique selon la revendication 7, dans lequel les moyens de commande commandent les gains des amplificateurs selon une opération de traitement des moyens de traitement, cette opération de traitement étant une transformation de Fourier.

9. Dispositif de conversion photo-électrique selon la revendication 7, dans lequel les moyens de commande commandent les gains des amplificateurs selon une opération de traitement des moyens de traitement, cette opération de traitement étant une convolution, une sortie de bord, une transformation de Laplace, ou une transformation à petites ondes.

10. Dispositif de conversion photo-électrique selon la revendication 1, dans lequel les gains possibles desdits amplificateurs, commandés par les signaux de commande de gain, comprennent des gains positifs et négatifs.

11. Dispositif de conversion photo-électrique selon la revendication 1, dans lequel lesdits moyens de commande comprennent des moyens pour délivrer les signaux de commande de gain respectifs (V-GAIN) en série aux amplificateurs.

12. Dispositif de conversion photo-électrique selon la revendication 1, dans lequel lesdits moyens de commande comprennent des moyens pour délivrer les signaux de commande de gain respectifs en parallèle aux amplificateurs.

13. Dispositif de conversion photo-électrique selon la revendication 1, dans lequel le même desdits amplificateurs reçoit des signaux de sortie venant d'une pluralité, mais non de la totalité, desdits éléments de conversion photo-électriques.

14. Dispositif de conversion photo-électrique selon la revendication 1, dans lequel le même élément de conversion photo-électrique délivre des signaux de sortie à une pluralité desdits amplificateurs.

15. Dispositif de conversion photo-électrique selon l'une quelconque des revendications précédentes, dans lequel les moyens de commande délivrent les signaux de commande de gain durant le fonctionnement du dispositif de conversion photo-électrique.
